# EUROPÄISCHE PATENTSCHRIFT

(11) **EP 2 143 627 B1**
(45) Veröffentlichungstag und Bekanntmachung des Hinweises auf die Patenterteilung: **04.09.2013**
(21) Anmeldenummer: 09008472.4
(22) Anmeldetag: 29.06.2009
(51) Int. Cl.: B62M 7/02, B62K 11/04, B60K 1/04, B62M 6/90, B60L 11/18

(54) **Elektrisch betriebenes Fahrzeug mit einem Fahrersattel**
Electrically operated vehicle with a driver saddle
Véhicule fonctionnant de manière électrique doté d'une selle de conducteur

(30) Priorität: 08.07.2008 DE 102008032044
(43) Veröffentlichungstag der Anmeldung: 13.01.2010
(73) Patentinhaber: KTM Sportmotorcycle AG, 5230 Mattighofen (AT)
(72) Erfinder: Plazotta, Bernhard, Dr., 5110 Oberndorf (AT); Rauscher, Alexander, 5231 Schalchen (AT)
(74) Vertreter: Söllner, Udo

(56) Entgegenhaltungen:
- EP-A1- 1 092 826
- JP-A- 5 105 147
- JP-A- 2004 210 072
- US-A- 5 501 292

## Beschreibung

Die vorliegende Erfindung betrifft ein Fahrzeug mit einem Fahrersattel und einem Fahrzeugrahmen, der zwei sich bis zu einem Steuerkopf erstreckende und im Abstand zueinander angeordnete Rahmenprofile besitzt und das Fahrzeug wenigstens ein an einer Vorderradführung des Fahrzeugrahmens geführtes Vorderrad und wenigstens ein an einer Hinterradführung geführtes Hinterrad aufweist und das Fahrzeug einen elektrisch betätigten Antriebsmotor sowie eine elektrische Energiespeichereinrichtung und eine Antriebsmotorsteuereinrichtung besitzt und zwischen dem Antriebsmotor und einem Antriebsrad ein Antriebsstrang vorgesehen ist und die Energiespeichereinrichtung zwischen den Rahmenprofilen oberhalb des Antriebsmotors aufnehmbar ist.

Bei dem hier angesprochenen Fahrzeug kann es sich um ein einspuriges Fahrzeug handeln mit einem Vorderrad und einem Hinterrad oder auch um ein zweispuriges Fahrzeug, mit einem Vorderrad und zwei Hinterrädern oder zwei Vorderrädern und einem Hinterrad.

Das Fahrzeug weist einen elektrisch betätigten Antriebsmotor zum Vortrieb auf, der demgemäß keine aus einer inneren Verbrennung stammenden Abgase produziert. Die Antriebsenergie wird einer elektrischen Energiespeichereinrichtung entnommen und die Antriebsmotorsteuereinrichtung dient der Versorgung des elektrischen Antriebsmotors mit der für den jeweiligen Anwendungsfall erforderlichen elektrischen Energie aus der Energiespeichereinrichtung.

Anhand der JP 2004 210 072 A ist ein elektrisches Motorrad bekannt geworden. Dieses bekannte Motorrad weist einen elektrischen Antriebsmotor auf, dessen Abtriebsmoment über eine Wellenverbindung zum Hinterrad des bekannten Motorrads übertragen wird. Eine Energiespeichereinrichtung in der Form von Batterien ist oberhalb des Antriebsmotors angeordnet und zwar im Abstand zur Antriebseinheit, die den elektrischen Antriebsmotor aufweist.

Anhand der JP 05 065 085 A ist ein elektrisch angetriebenes Motorrad bekannt geworden, welches einen elektrischen Antriebsmotor aufweist, der über eine Antriebskette sein Abtriebsmoment auf das Hinterrad überträgt. Die elektrische Energiespeichereinrichtung in der Form von Batterien ist zwischen zwei kastenförmigen Rahmenprofilen angeordnet und zwar oberhalb des elektrischen Antriebsmotors und im Abstand zu diesem.

Anhand der US 5,501,292 B1 ist ein elektrisch betriebenes Motorrad bekannt geworden, welches eine Batterie besitzt, die zwischen seitlichen Rahmenprofilen verläuft, die mit dem Steuerkopfrohr des Rahmens des bekannten Motorrads verbunden sind. Die Batterie ist oberhalb des Antriebsmotors und im Abstand zu diesem angeordnet. Anhand dieser Druckschrift ist auch eine Ausführungsform bekannt geworden mit Batterien sowohl oberhalb, als auch unterhalb des Antriebsmotors, der seine Antriebsenergie über einen Antriebsstrang mit einem Primärantrieb und einem Sekundärantrieb auf das Hinterrad des Motorrads überträgt. Bei dem Primärantrieb handelt es sich dabei um einen CVT-Variator, der ein Übersetzungsverhältnis stufenlos verändern kann und sowohl auf der Antriebsmotorwelle als auch getriebeeingangsseitig jeweils ein Kegelscheibenpaar besitzt, welches auf der Seite der Getriebeeingangswelle mittels einer Fliehkraftkupplung in die Momentenübertragung eingekoppelt werden kann.

Anhand US 5,657,830 A ist eine gattungsgemäße Fahrzeuganordnung mit Batterien bekannt geworden, die zur Speisung des elektrischen Motors vorgesehen sind.

Anhand der DE 603 00 636 T2 ist ein elektrisches Fahrzeug bekannt geworden, welches eine Batteriebaugruppe besitzt, die an einer Sattelstütze des Fahrzeugs festgelegt werden kann. Als Antriebsmotor dient eine Antriebsgruppe, die im Hinterrad angeordnet ist. Bei der Antriebsgruppe handelt es sich um einen Radnabenmotor, der körperlich von der Batteriebaugruppe beabstandet angeordnet ist.

Anhand der DE 10 2007 019 803 A1 ist ein Rahmen für einen variablen Batteriekasten bekannt geworden, der sich dadurch auszeichnet, dass sich der Batteriekasten zwischen Rahmenrohren des damit ausgestatteten Zweirads befindet, wobei weitere Einzelheiten bezüglich der Anordnung des Batteriekastens relativ zu einem Elektromotor anhand dieser Druckschrift nicht ersichtlich sind.

Anhand der WO 2005/044602 A2 ist eine Rahmenstruktur eines Zweirads mit einem Batteriekasten bekannt geworden, der zwischen den Rahmenstreben angeordnet werden kann.

Anhand der DE 42 01 207 A1 ist ein elektrisch angetriebene Zweirad bekannt geworden mit einem Batteriekasten zwischen zwei Rahmenschleifen, wobei ein Antriebsmotor von dem Batteriekasten getrennt angeordnet ist.

Elektrisch betätigte Motorräder, wie sie vorstehend beschrieben worden sind, besitzen eine Energiespeichereinrichtung, die regelmäßig nachgeladen werden muss. Hierzu wird die Energiespeichereinrichtung mit einem Ladegerät oder dergleichen verbunden, wobei als Alternative hierzu der Austausch der entladenen Energiespeichereinrichtung gegen eine frisch geladene oder noch genügend Kapazität aufweisende Energiespeichereinrichtung besteht.

Bei den bekannten beschriebenen Motorrädern muss hierzu eine elektrisch leitende Verbindung zwischen der Antriebseinheit und der Energiespeichereinrichtung in der Form eines Anschlusskabels gelöst werden und dann die entladene Energiespeichereinrichtung mittels Werkzeugeinsatzes aus dem Motorrad ausgebaut werden und die neue Energiespeichereinrichtung wiederum mittels Werkzeugeinsatzes in das Motorrad eingebaut werden und daraufhin die elektrisch leitende Verbindung zwischen der Antriebseinheit und der Energiespeichereinrichtung wieder hergestellt werden.

Ein solcher Vorgang ist zeitaufwendig und arbeitsintensiv. Zudem führt das Vorhandensein der elektrisch leitenden Verbindung in der Form eines Kabels zwischen der Energiespeichereinrichtung und der Antriebseinheit auch dazu, dass ein Sicherheitsrisiko und Bedienrisiko besteht. Ein Verpolungsschutz kann zwar über eine codierte Stecker-Buchseneinheit erreicht werden, eine frei liegende oder frei zugängliche elektrische Leitung stellt aber ein Risikopotential dar, da bei leistungsstarken Motorrädern hohe Spannungswerte und Stromwerte zwischen der Antriebseinheit und der Energiespeichereinrichtung vorliegen.

Bei einem auch zu Fahrten in unbefestigtem Gelände vorgesehenen elektrisch betriebenen Motorrad besteht zudem die Möglichkeit, dass das Motorrad in unbeabsichtigter Weise nach einem Sturz oder nach einem Wegrutschen eines der Räder des Motorrads Bodenkontakt erfährt und somit die Gefahr der Beschädigung der elektrischen Verbindungsleitung zwischen der Antriebseinheit und der Energiespeichereinrichtung besteht.

Auch besitzen die bekannten beschriebenen Motorräder einen komplex aufgebauten Antriebsstrang. Um entsprechende Antriebsleistung zu erreichen, muss der Elektromotor relativ hohe Drehzahlen ermöglichen, die im Primärantrieb des Antriebsstrangs reduziert werden müssen. Zu diesem Zweck ist bei dem vorstehend genannten bekannten Motorrad ein CVT-Getriebe als Primärantrieb vorgesehen. Es ist auch bereits bekannt geworden, anstelle eines CVT-Getriebes einen Kettentrieb als Primärantrieb vorzusehen. Beide genannten Lösungen sind nachteilig, da sie insbesondere in Längsrichtung des Primärantriebs aufgrund des Zugmittels in der Form eines Riemens oder einer Kette einen großen Platzbedarf besitzen. Auch führt dieser Primärantrieb zu einem Nachteil bei der Dynamik des damit ausgestatteten Fahrzeugs, da es im Primärantrieb zu Antriebsenergie verbrauchenden Longitudinalschwingungen des Zugmittels kommen kann, diese Schwingungen treten darüber hinaus akustisch negativ in Erscheinung und der erhöhte Platzbedarf des Zugmittels führt auch zu einer Zunahme des Gewichts des Primärantriebs und damit des Gesamtfahrzeugs, was einer gewünschten dynamischen Auslegung des Fahrzeugs hinderlich entgegensteht.

Ausgehend hiervon liegt der vorliegenden Erfindung nunmehr zur Beseitigung der geschilderten Nachteile die Aufgabe zugrunde, das Fahrzeug derart weiterzubilden, dass zwischen der Energiespeichereinrichtung und dem Antriebsstrang keine frei liegenden Verbindungsleitungen mehr vorliegen und der Antriebsstrang des zu schaffenden Fahrzeugs weniger Verlustleistung besitzt, als dies bei bekannten elektrisch betriebenen Fahrzeugen der gattungsgemäßen Art der Fall ist.

Die Erfindung weist nunmehr zur Lösung dieser Aufgabe die im Anspruch 1 angegebenen Merkmale auf. Vorteilhafte Ausgestaltungen hiervon sind in den weiteren Ansprüchen beschrieben.

Die Erfindung schafft nun ein Fahrzeug mit einem Fahrersattel und einem Fahrzeugrahmen, der zwei sich bis zu einem Steuerkopf erstreckende und im Abstand zueinander angeordnete Rahmenprofile besitzt und das Fahrzeug wenigstens ein an einer Vorderradführung des Fahrzeugrahmens geführtes Vorderrad und wenigstens ein an einer Hinterradführung geführtes Hinterrad aufweist und das Fahrzeug einen elektrisch betätigten Antriebsmotor sowie eine elektrische Energiespeichereinrichtung und eine Antriebsmotorsteuereinrichtung besitzt und zwischen dem Antriebsmotor und einem Antriebsrad ein Antriebsstrang vorgesehen ist und die Energiespeichereinrichtung zwischen den Rahmenprofilen oberhalb des Antriebsmotors aufnehmbar ist, wobei die Energiespeichereinrichtung an einer den Antriebsmotor aufnehmenden Antriebseinheit lösbar festlegbar ist.

Damit schafft die Erfindung ein elektrisch betätigtes Fahrzeug, bei dem mittels der Anordnung der Energiespeichereinrichtung an der Antriebseinheit eine elektrisch leitende Verbindung zwischen der Energiespeichereinrichtung und der Antriebseinheit beziehungsweise dem Antriebsmotor hergestellt wird und dies automatisch passiert bei der Montage der Energiespeichereinrichtung an der Antriebseinheit, ohne dass der Benutzer hierfür eine kabelgebundene Stecker- und Buchsenverbindung zwischen der Energiespeichereinrichtung und der Antriebseinheit verbinden müsste. Nimmt der Benutzer die Energiespeichereinrichtung von der Antriebseinheit ab, so löst er damit auch die elektrisch leitende Verbindung zwischen der Energiespeichereinrichtung und der Antriebseinheit und zwar so, dass die elektrisch leitende Verbindung unterbrochen wird, bevor elektrisch leitende Kontakte zwischen der Energiespeichereinrichtung und der Antriebseinheit von außen zugänglich sind. Bei der umgekehrten Montage einer Energiespeichereinrichtung an der Antriebseinheit wird die elektrisch leitende Verbindung bei der Montage der Energiespeichereinrichtung an der Antriebseinheit automatisch hergestellt, wobei zu diesem Zweck an der Energiespeichereinrichtung und der Antriebseinheit beispielsweise form- und flächenkomplementäre Rastnasen oder dergleichen vorgesehen sein können, die eine Anordnung der Energiespeichereinrichtung an der Antriebseinheit nur in einer einzigen Montagestellung zulassen und die elektrisch leitende Verbindung zwischen der Energiespeichereinrichtung und der Antriebseinheit erst dann hergestellt wird, wenn die elektrisch leitenden Kontakte an der Energiespeichereinrichtung und der Antriebseinheit von außen nicht mehr frei für den Benutzer zugänglich sind.

Damit ist gleichzeitig ein Schnellwechselsystem geschaffen worden, da sich der Benutzer über die elektrisch leitende Verbindung zwischen der Energiespeichereinrichtung und der Antriebseinheit keine Gedanken mehr machen muss, da diese automatisch und zwangsgeführt hergestellt wird, ohne dass der Benutzer hierzu gesondert eingreifen müsste.

Handelt es sich bei dem erfindungsgemäß vorgesehenen Fahrzeug beispielsweise um ein Geländesportmotorrad, welches zu sportlichen Fahrten im unbefestigten Gelände oder zu Wettbewerbszwecken vorgesehen ist, so führt die Konfiguration, dass die Energiespeichereinrichtung zwischen den Rahmenprofilen vorgesehen ist, auch dazu, dass bei einem unbeabsichtigten Sturz des Fahrers mit seinem Fahrzeug die Energiespeichereinrichtung durch die Rahmenprofile gegen eine Beschädigung durch am Boden liegende Steine oder dergleichen geschützt ist. Bei den Rahmenprofilen kann es sich um geschlossene oder auch offene Hohlprofile handeln, die kreisrohrförmig, ovalförmig oder kastenförmig ausgebildet sein können und sich bis zu einem Steuerkopf des Fahrzeugs erstrecken. Der Steuerkopf weist Steuerkopflager oder Lenkkopflager auf, die eine Vorderradführung am Fahrzeug schwenkbar aufnehmen.

Darüber hinaus führt die Anordnung der Antriebseinheit und der Energiespeichereinrichtung innerhalb der Rahmenprofile des erfindungsgemäßen Fahrzeugs dazu, dass das Fahrzeug sehr gute Fahr- und Handlingeigenschaften besitzt. Es wird dadurch eine Konfiguration geschaffen mit einem Fahrzeugschwerpunkt unterhalb des Fahrersattels innerhalb eines durch die Rahmenprofile gebildeten Aufnahmeraums. Sitzt ein Fahrer auf dem Fahrersattel in normaler Haltung etwa im Bereich einer im Fahrersattel ausgebildeten tiefsten Stelle in der Form einer Mulde, so befindet sich der Fahrer mit seinem Körperschwerpunkt von der Oberfläche aus betrachtet, auf der das Fahrzeug fährt, in vertikaler Linie oberhalb des Fahrzeugschwerpunkts, so dass mit dem erfindungsgemäßen Fahrzeug dynamische Fahrbewegungen um die durch den Fahrzeugschwerpunkt verlaufende Hochachse bei geringem Trägheitsmoment um diese Hochachse herum möglich sind. Die Antriebseinheit ist dabei in Fahrtrichtung des Fahrzeugs betrachtet vor einer Aufnahme für die Hinterradführung des Fahrzeugs angeordnet.

Nach einer Weiterbildung der Erfindung ist an der Antriebseinheit und der Energiespeichereinrichtung eine Stecker-Buchsen-Verbindung vorgesehen, die bei einer Festlegung der Energiespeichereinrichtung an der Antriebseinheit eine elektrisch leitende Verbindung herstellt. Bei der Festlegung der Energiespeichereinrichtung an der Antriebseinheit kann es sich um die Montage handeln, während der die Energiespeichereinrichtung an der Antriebseinheit über eine vorstehend bereits erwähnte Rastnasenverbindung oder eine andere Schnellverbindung angeordnet wird und dabei bereits eine elektrisch leitende Verbindung hergestellt wird. Auch kann es sich bei der Festlegung um einen Vorgang handeln, bei dem die Energiespeichereinrichtung an der Antriebseinrichtung schon angeordnet worden ist, eine elektrisch leitende Verbindung aber beispielsweise erst beim Verrasten zwischen der Energiespeichereinrichtung und der Antriebseinheit hergestellt wird.

Nach einer Weiterbildung der Erfindung ist es vorgesehen, dass die Antriebseinheit ein den Antriebsmotor und ein Getriebe aufnehmendes erstes Gehäuse besitzt, wobei an einer der Energiespeichereinrichtung zugewandten Gehäuseseite ein Stecker oder eine Buchse zur elektrischen Verbindung mit der Energiespeichereinrichtung vorgesehen ist. Es kann ein die Energiespeichereinrichtung aufnehmendes zweites Gehäuse vorgesehen sein, wobei an einer der Antriebseinheit zugewandten Gehäuseseite eine Buchse oder ein Stecker zur elektrischen Verbindung mit der Antriebseinheit vorgesehen ist. Es bedeutet dies mit anderen Worten, dass am ersten Gehäuse ein Stecker und am zweiten Gehäuse eine Buchse oder am ersten Gehäuse eine Buchse und am zweiten Gehäuse ein Stecker vorgesehen ist und es zu einer sicheren elektrischen Kontaktierung zwischen der Energiespeichereinrichtung und der Antriebseinheit bei der Anordnung beziehungsweise der Festlegung der Energiespeichereinrichtung an der Antriebseinheit kommt. Bei der Demontage der Energiespeichereinrichtung von der Antriebseinheit wird die elektrisch leitende Verbindung dazwischen getrennt, bevor elektrische Kontakte für den Benutzer zugänglich sind. Die Energiespeichereinrichtung kann mit einer Einrichtung versehen sein, die an ihr vorgesehene elektrische Kontakte spannungslos schaltet, sobald die körperliche Verbindung zwischen der Energiespeichereinrichtung und der Antriebseinheit gelöst wird.

Nach einer Weiterbildung der Erfindung ist es vorgesehen, dass die Antriebseinheit eine Aufnahme zur Anordnung einer Hinterradführung des Fahrzeugs besitzt. Bei der Hinterradführung kann es sich beispielsweise um eine Hinterradschwinge handeln, die der Führung eines Hinterrads des Fahrzeugs dient, die einen Schwingendrehpunkt aufweist, der sich innerhalb des ersten Gehäuses der Antriebseinheit angeordnet befindet. Dies führt zu einer kompakten Bauweise des erfindungsgemäßen Fahrzeugs.

Nach einer Weiterbildung der Erfindung ist es auch vorgesehen, dass die Antriebsmotorsteuereinrichtung in der Antriebseinheit angeordnet ist. Die Antriebsmotorsteuereinrichtung kann also in dem ersten Gehäuse angeordnet sein und daher für den Benutzer des Fahrzeugs unzugänglich, so dass der unbeabsichtigte Kontakt des Benutzers des Fahrzeugs mit stromführenden Komponenten vermieden ist. Auch führt diese Konfiguration dazu, dass das erste Gehäuse zur Kühlung des Antriebsmotors und der Antriebsmotorsteuereinrichtung ausgebildet sein kann und sich daher erwärmende Gehäusebestandteile in der Form von Kühlrippen und dergleichen in einem Bereich des Fahrzeugs angeordnet werden können, der einerseits gut im Kühlluftstrom des Fahrzeugs liegt und andererseits gegen Verschmutzungen gut geschützt ist und bei bestimmungsgemäßer Verwendung des Fahrzeugs auch vom Benutzer des Fahrzeugs nicht kontaktiert wird.

Um nun ein schnelles Austauschen einer entleerten oder weitgehend entleerten Energiespeichereinrichtung gegen eine ausreichend oder voll geladene Energiespeichereinrichtung zu erreichen, ist es nach einer Weiterbildung der Erfindung vorgesehen, dass die Energiespeichereinrichtung und die Antriebseinheit mittels einer vorzugsweise ohne Zuhilfenahme von Werkzeug betätigbaren Schnellkupplung unter Herstellung einer elektrisch leitenden Verbindung zwischen der Energiespeichereinrichtung und dem Antriebsmotor verbindbar sind. Bei der Schnellkupplung kann es sich um eine Rastkupplung, um eine selbst einschnappende Kupplung, eine Klemmkupplung oder dergleichen handeln, die beispielsweise Zwangsführungselemente an der Energiespeichereinrichtung und der Antriebseinheit aufweist, so dass die Energiespeichereinrichtung nur in einer einzigen Stellung an der Antriebseinheit befestigt werden kann und die Schnellkupplung bei der Montage der Energiespeichereinrichtung an der Antriebseinheit selbsttätig verrastet unter gleichzeitiger Herstellung einer elektrisch leitenden Verbindung zwischen der Energiespeichereinrichtung und dem Antriebsmotor.

Nach einer Weiterbildung der Erfindung ist es auch vorgesehen, dass an dem ersten Gehäuse eine Anschlusseinrichtung vorgesehen ist zum Anschluss einer Ladeeinrichtung zur Einspeisung elektrischer Energie in die Energiespeichereinrichtung. Diese Anschlusseinrichtung kann am ersten Gehäuse beispielsweise oberhalb eines Bereiches angeordnet sein, an den vom Antriebsrad aufgewirbelte Verschmutzungen in der Form von Schlamm, Steinen oder dergleichen gelangen können. Die Erfindung sieht es aber auch vor, dass stattdessen oder zusätzlich an dem zweiten Gehäuse eine Anschlusseinrichtung für den Anschluss der Ladeeinrichtung angeordnet ist. Damit wird es möglich, dass der Benutzer des erfindungsgemäßen Fahrzeugs beispielsweise am Ende des Tages die Energiespeichereinrichtung mit dem zweiten Gehäuse von der Antriebseinheit trennt und die Energiespeichereinrichtung getrennt von dem Fahrzeug aufladen kann. Damit kann die Energiespeichereinrichtung sowohl am Fahrzeug als auch getrennt vom Fahrzeug aufgeladen werden.

Nach einer Weiterbildung der Erfindung ist es vorgesehen, dass der Antriebsstrang einen einstufigen, zugmittelfreien Primärantrieb zwischen einer Abtriebswelle des Antriebsmotors und einer Abtriebswelle der Antriebseinheit aufweist.

Diese Konfiguration sorgt für einen geringen Bauraumbedarf des Primärantriebs und damit für ein hochdynamisches Fahrzeug und für den Entfall eines verlustreichen komplexen Getriebes, wie es sich beispielsweise bei einem mit einem Riemen als Zugmittel ausgestatteten stufenlosen Getriebe zwischen der Abtriebswelle des elektrischen Antriebsmotors und einer Getriebeeingangswelle handeln kann.

Nach einer Weiterbildung der Erfindung ist es dabei vorgesehen, dass der Primärantrieb ein zwei Verzahnungen aufweisendes, einstückiges Zwischenrad aufweist, dessen erste Verzahnung mit einer Verzahnung der Abtriebswelle des Antriebsmotors kämmt und dessen zweite Verzahnung mit einer Verzahnung der Abtriebswelle der Antriebseinheit kämmt. Damit schafft die Erfindung eine ausgesprochen platzsparende Konfiguration des Primärantriebs, da die beiden Verzahnungen an dem Zwischenrad im axialen Abstand zueinander vorgesehen sind. Die Längsachse des Zwischenrads verläuft parallel zur Längsachse der Abtriebswelle des elektrischen Antriebsmotors und parallel zur Abtriebswelle der Antriebseinheit. Dies ermöglicht eine ausgesprochen platzsparende und kostengünstige Bauweise, da auf eine Fliehkraftkupplung, wie sie bei dem vorstehend erwähnten bekannten elektrisch betriebenen Motorrad vorhanden ist, verzichtet werden kann und auch kein Zugmittel auftritt, das den Bauraumbedarf deutlich erhöhen würde.

Nach einer Weiterbildung der Erfindung ist es vorgesehen, dass der Antriebsstrang zwischen einer Abtriebswelle der Antriebseinheit und einem Antriebsrad ein Zugmittel besitzt. Bei dem Zugmittel kann es sich um eine Kette oder einen Riemen handeln, bei dem Antriebsrad kann es sich beispielsweise um ein Hinterrad eines einspurig elektrisch angetriebenen Motorrads nach der vorliegenden Erfindung handeln.

Nach einer Weiterbildung der Erfindung ist es vorgesehen, dass die Antriebseinheit zumindest im Bereich des Antriebsmotors und der Antriebsmotorsteuereinrichtung mit in Längsrichtung der Antriebseinheit verlaufenden Kühlrippen und im Bereich der Antriebsmotorsteuereinrichtung mit einem Abschnitt mit in vertikaler Richtung verlaufenden Kühlrippen versehen ist, der eine Aufnahme zur Anordnung einer Hinterradführung besitzt und von der Abtriebswelle der Antriebseinheit durchsetzt ist. Statt der oder zusätzlich zu den längs verlaufenden Kühlrippen können auch radial verlaufende Kühlrippen vorgesehen sein, die der Kühlung der Antriebseinheit dienen.

Damit besitzt die Antriebseinheit im Bereich der Antriebsmotorsteuereinrichtung vertikal verlaufende Kühlrippen, die sowohl nach oben, als auch nach unten offen sind und somit einen Kühlrippenblock ausbilden, in dem eine quer zur Längsrichtung der Antriebseinheit verlaufende Bohrung ausgebildet ist, die von einer Achse durchsetzt werden kann, mit der die vorstehend bereits erwähnte Hinterradschwinge in diesem Kühlrippenblock gelagert werden kann. Damit wird eine platzsparende Funktionsintegration geschaffen, da auf diese Weise am Fahrzeugrahmen keine eigenständige Anbindungsfläche für die Hinterradschwinge geschaffen werden muss.

Nach einer Weiterbildung der Erfindung ist es vorgesehen, dass die Antriebseinheit einen mit einem Deckel verschließbaren Aufnahmeraum für den Antriebsmotor besitzt und die Abtriebswelle des Antriebsmotors mittels eines Wälzlagers in dem Deckel lagerbar ist und der Deckel mit Kühlrippen versehen ist. Damit ist eine Konfiguration geschaffen, mit der beispielsweise nach dem Baukastensystem unterschiedlich leistungsstarke Fahrzeuge nach der vorliegenden Erfindung möglich sind. So kann ein Antriebsmotor gegen einen beispielsweise leistungsstärkeren Antriebsmotor einfach dadurch ausgewechselt werden, dass nach einer Demontage des Deckels und einer Demontage eines mit dem Zwischenzahnrad in kämmendem Eingriff stehenden Zahnrads an der Abtriebswelle des elektrischen Antriebsmotors dieser aus dem ersten Gehäuse der Antriebseinheit herausgenommen wird und gegen einen beispielsweise leistungsstärkeren Antriebsmotor ausgewechselt wird. Dies kann nach einer vorteilhaften Ausführungsform der vorliegenden Erfindung sogar bei in den Fahrzeugrahmen montierter Antriebseinheit geschehen. Da die Energiespeichereinrichtung lösbar an der Antriebseinheit festlegbar ist, kann diese ebenfalls einfach von der Antriebseinheit abgenommen werden und gegen eine andere Energiespeichereinrichtung mit beispielsweise weiteren Batteriezellen ausgetauscht werden. Danach würde ein leistungsstärkeres erfindungsgemäßes Fahrzeug zur Verfügung stehen.

Schließlich ist es nach der vorliegenden Erfindung auch vorgesehen, dass es sich bei dem erfindungsgemäßen Fahrzeug um ein einspuriges Fahrzeug handelt mit nur einem Vorderrad und nur einem Hinterrad und die Antriebseinheit zwischen den Rahmenprofilen unterhalb der Energiespeichereinrichtung angeordnet ist und das Fahrzeug eine mit der Vorderradführung funktional gekoppelte Lenkeinrichtung aufweist und das Hinterrad mittels einer Schwinge geführt ist, die in der Antriebseinheit gelagert ist. Bei diesem erfindungsgemäßen einspurigen Fahrzeug kann es sich also um ein Motorrad handeln, das beispielsweise für den Betrieb auch abseits von befestigten Fahrbahnen ausgebildet ist und mit großen Federwegen ausgestattet ist, um zu Geländesportzwecken geeignet zu sein.

Bei diesem erfindungsgemäßen Fahrzeug befindet sich die Energiespeichereinrichtung unterhalb des Fahrersattels angeordnet und zwar durch die seitlich verlaufenden Rahmenprofile auch seitlich geschützt, so dass die Energiespeichereinrichtung auch beim harten Geländeeinsatz und einem etwaigen Sturz im unbefestigten Gelände gegen Beschädigungen allseitig geschützt ist. Ein solches Fahrzeug kann neben der bereits montierten Energiespeichereinrichtung mit einer zweiten Energiespeichereinrichtung versehen sein, die in sehr kurzer Zeit gegen die nach längerer Fahrstrecke entleerte erste Energiespeichereinrichtung ausgetauscht werden kann.

Hierzu ist es lediglich erforderlich, den Fahrersattel abzunehmen, der beispielsweise mittels einer rastbaren oder klemmbaren Verbindung mit dem Fahrzeugrahmen gekoppelt ist, so dass auch der Fahrersattel ohne Zuhilfenahme eines Werkzeugs abgenommen werden kann. Nach der Demontage des Fahrersattels ist die Energiespeichereinrichtung von oben frei zugänglich und kann ohne Zuhilfenahme eines Werkzeugs aus dem Rahmenbereich zwischen den Rahmenprofilen herausgenommen werden. Das Einsetzen der ausreichend geladenen zweiten Energiespeichereinrichtung in den Bereich zwischen den beiden Rahmenprofilen und die Festlegung an der Antriebseinheit sorgt dafür, dass die elektrisch leitende Verbindung zwischen der Antriebseinheit und der Energiespeichereinrichtung wiederum ohne Zuhilfenahme von Werkzeug hergestellt wird. Nach dem Aufsetzen und beispielsweise Verrasten des Fahrersattels mit dem Fahrzeugrahmen ist das Fahrzeug sofort wieder einsatzbereit.

Während des Betriebs mit der zweiten Energiespeichereinrichtung kann die erste Energiespeichereinrichtung wieder nachgeladen werden, so dass sie nach dem Entleeren der zweiten Energiespeichereinrichtung wieder in voll geladenem Zustand zur Verfügung steht, so dass die Einsatzdauer des erfindungsgemäßen Fahrzeugs gleichsam unbegrenzt ist.

Die Erfindung wird im Folgenden anhand der Zeichnung näher erläutert. Diese zeigt in:
Fig. 1 eine Seitenansicht eines Fahrzeugs gemäß einer Ausführungsform nach der vorliegenden Erfindung;
Fig. 2 eine Darstellung des Fahrzeugs nach Fig. 1, bei dem einige Bauteile abgenommen worden sind;
Fig. 3 eine Darstellung des Fahrzeugs nach Fig. 2 von oben;
Fig. 4A eine vergrößerte Darstellung der Antriebseinheit des Fahrzeugs nach Fig. 1 mit daran angeordneter Energiespeichereinrichtung;
Fig. 4B eine Darstellung ähnlich Fig. 4A mit einer an der Energiespeichereinrichtung vorgesehenen Anschlusseinrichtung zum Anschluss einer Ladeeinrichtung; und
Fig. 5 eine Schnittdarstellung der Antriebseinheit nach Fig. 4 entlang der Linie V-V.

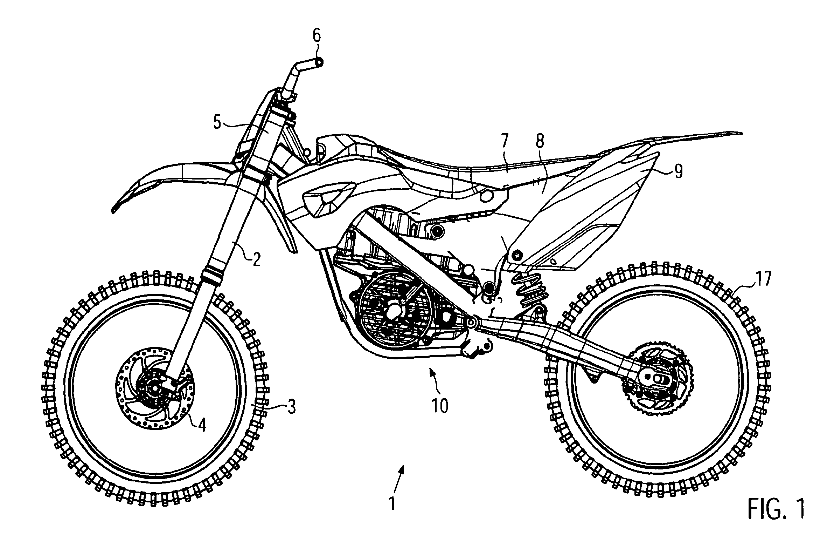

Bei dem in Fig. 1 der Zeichnung dargestellten Fahrzeug 1 handelt es sich um ein einspuriges Fahrzeug in der Form eines Motorrads, welches sowohl für die Fahrt auf befestigter Straße, als auch für die Fahrt in unbefestigtem Gelände vorgesehen ist.

Das Fahrzeug 1 weist ein an einer in der Form einer Vorderradgabel ausgebildeten Vorderradführung 2 drehbar angeordnetes Vorderrad 3 auf, welches mittels einer Bremsscheibe 4 und einer nicht näher dargestellten Bremsenbaugruppe gebremst werden kann. Die Vorderradführung 2 ist um einen vorbestimmten Drehwinkel drehbar in einem Steuerkopf 5 oder auch Lenkkopf gelagert. Mittels einer Lenkeinrichtung in der Form einer Lenkstange 6 kann die Vorderradführung 2 von einem Fahrer verschwenkt werden, der auf einem Fahrersattel 7 sitzen kann.

Der Fahrersattel 7 sowie seitliche Verkleidungsbauteile 8 und eine Heckrahmenbaugruppe 9 können lösbar an einem Fahrzeugrahmen 10 festgelegt werden, der aus mehreren Rahmenprofilen gebildet ist.

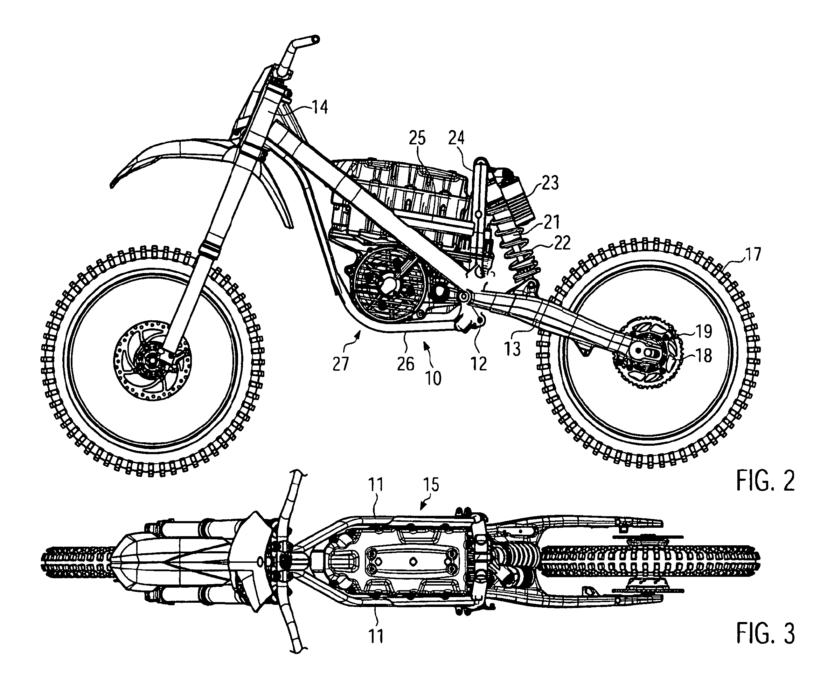

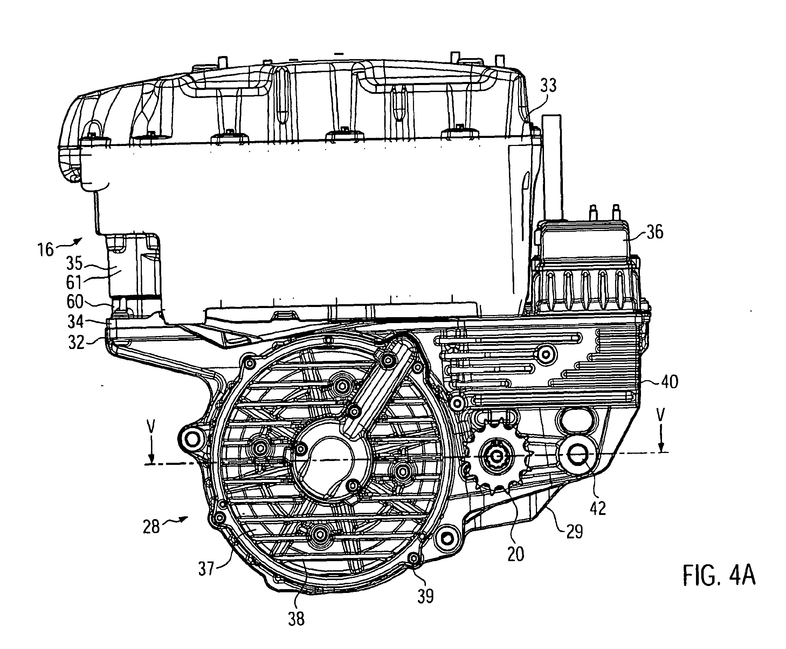

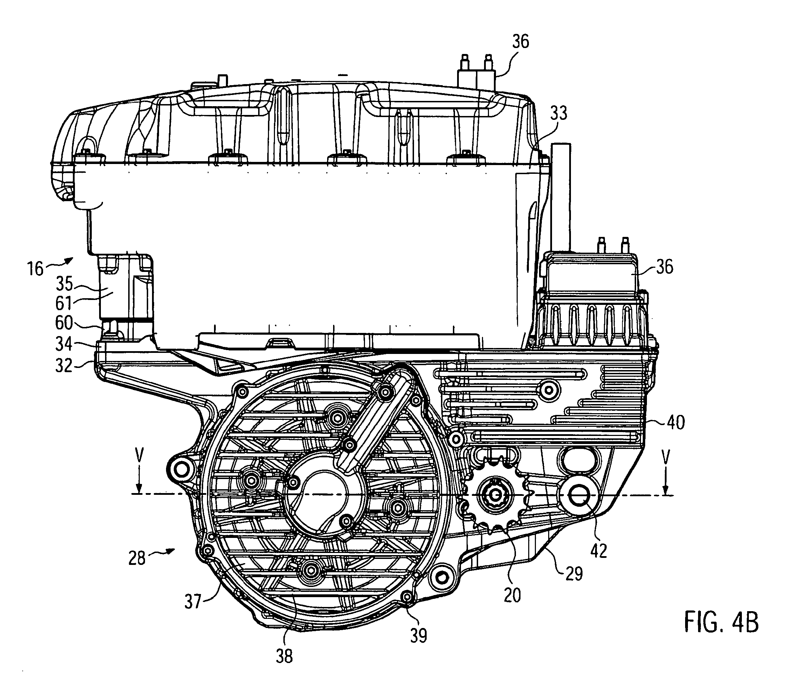

Wie es ohne weiteres anhand von Fig. 2 der Zeichnung ersichtlich ist, die eine Seitendarstellung des in Fig. 1 der Zeichnung dargestellten Motorrads zeigt, bei der Verkleidungsbauteile 8 und die Heckrahmenbaugruppe 9 entfernt worden ist, weist der Fahrzeugrahmen 10 unter anderem zwei (siehe auch Fig. 3) Rahmenprofile 11 auf, die sich von einem unteren Rahmendreieck 12, an dem eine Hinterradführung 13 in der Form einer Schwinge gelagert ist, im Abstand zueinander bis zum Steuerkopf 5 erstrecken, der bei der dargestellten Ausführungsform von einem Steuerkopfrohr 14 gebildet ist, und dabei aufgrund ihrer Anordnung im Abstand zueinander zwischen sich einen Aufnahmeraum 15 ausbilden, in dem eine noch näher anhand von Fig. 4 der Zeichnung ersichtliche Energiespeichereinrichtung 16 aufgenommen werden kann.

Bei den Rahmenprofilen 11 kann es sich um geschlossene oder offene Hohlprofile handeln, die bei niedrigem Gewicht eine hohe Steifigkeit besitzen und aufgrund ihrer Anordnung im Abstand zueinander zwischen sich die Energiespeichereinrichtung 16 aufnehmen können, die daher bei einem etwaigen Sturz des Fahrzeugs 1 gegen Beschädigungen gut geschützt ist.

An der Hinterradführung beziehungsweise Schwinge 13 ist ein Hinterrad 17 drehbar gelagert, welches neben einer Bremsscheibe 18 ein Kettenrad 19 besitzt, an dem ein nicht näher dargestelltes Zugmittel in der Form einer Kette angeordnet werden kann, die mit einem Ketten ritzel 20 in Eingriff steht und über die das Fahrzeug 1 in Vortrieb versetzt werden kann.

Wie es anhand von Fig. 2 weiterhin ersichtlich ist, stützt sich die Schwinge 13 über eine Federeinrichtung 21 mit einer einstellbaren Feder 22 und einem einstellbaren Dämpferelement 23 gegen eine Abstützung 24 des Fahrzeugrahmens 10 ab, die sich wiederum über Rahmenprofile 25 gegen die Rahmenprofile 11 abstützt.

Die Rahmenprofile 25 verlaufen dabei so zwischen den Rahmenprofilen 11 und der Abstützung 24, die von zwei vom Rahmendreieck 12 ausgehenden, weitgehend vertikal nach oben gezogenen Rohren gebildet ist, dass sie zusammen mit den vom Rahmendreieck 12 schräg nach oben in Richtung zum Steuerkopfrohr 14 verlaufenden Rahmenprofilen 11 den bereits erwähnten Aufnahmeraum 15 für die Energiespeichereinrichtung 16 ausbilden.

Der Fahrzeugrahmen 10 umfasst darüber hinaus zwei weitere Rahmenprofile in der Form von Unterzügen 26, die sich weitgehend vom Rahmendreieck 12 in geschwungener Form in Richtung zum Steuerkopfrohr 14 erstrecken und zwar derart, dass sie vom Rahmendreieck 12 zunächst weitgehend horizontal verlaufen. Um dann ähnlich einem "S" bis zum Steuerkopfrohr 14 weiter zu laufen.

Diese Unterzüge 26 bilden zusammen mit den weiteren vorstehend genannten Rahmenprofilen einen Aufnahmeraum 27 für eine näher noch anhand von Fig. 4 der Zeichnung ersichtliche Antriebseinheit 28 aus.

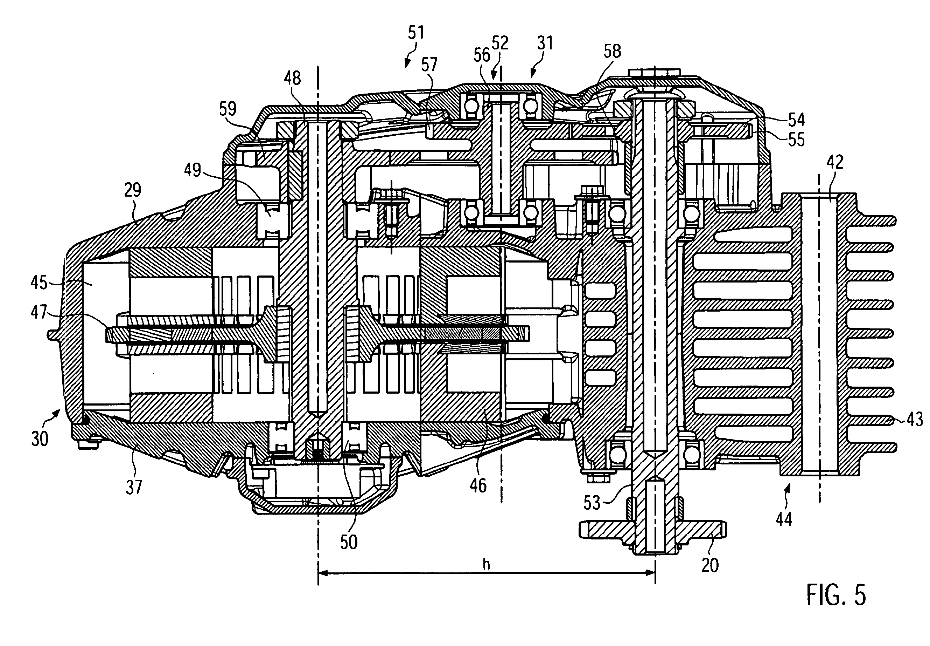

Die Antriebseinheit 28 weist ein erstes Gehäuse 29 auf, in dem ein näher noch anhand von Fig. 5 der Zeichnung ersichtlicher elektrischer Antriebsmotor 30 und ein Getriebe 31 gelagert ist.

Das erste Gehäuse 29 weist an seiner Oberseite eine Anschlussfläche 32 für die Aufnahme der Energiespeichereinrichtung 16 auf. Die Energiespeichereinrichtung 16 besitzt ein zweites Gehäuse 33, in dem eine Vielzahl von wiederaufladbaren Batterien angeordnet ist. Die Anordnung der Energiespeichereinrichtung 16 an der Antriebseinheit 28 erfolgt dabei derart, dass bei der Festlegung der Energiespeichereinrichtung 16 an der Antriebseinheit 22 eine elektrisch leitende Verbindung zwischen der Energiespeichereinrichtung 16 und der Antriebseinheit 28 hergestellt wird, ohne dass der Benutzer des Fahrzeugs 1 mit spannungsführenden Bauteilen der Kombination aus Antriebseinheit 28 und Energiespeichereinrichtung 16 in Berührung kommen kann.

Zu diesem Zweck ist an der Anschlussfläche 32 und einer komplementären Anschlussfläche 34 der Energiespeichereinrichtung 16 eine Schnellkupplungseinrichtung vorgesehen, die verrastbare, verschnappbare, selbsttätig rastende oder selbsttätig klemmende Bauteile besitzt, die dafür sorgen, dass bei der Anordnung der Energiespeichereinrichtung 16 an der Antriebseinheit 28 eine vorzugsweise formschlüssige Verbindung zwischen dem ersten Gehäuse 29 und dem zweiten Gehäuse 33 hergestellt wird und diese Verbindung ohne die Zuhilfenahme von Werkzeug herbeigeführt werden kann.

Wird die Energiespeichereinrichtung 16 an der Antriebseinheit 28 angeordnet, so wird gleichzeitig eine elektrisch leitende Verbindung zwischen der Energiespeichereinrichtung 16 und der Antriebseinheit 28 hergestellt, wobei zu diesem Zweck eine Stecker-Buchsen-Verbindung 35 zwischen der Energiespeichereinrichtung 16 und der Antriebseinheit 28 die elektrisch leitende Verbindung herstellt.

Die Stecker-Buchsen-Verbindung 35 ist bei der dargestellten Ausführungsform derart ausgeführt, dass das erste Gehäuse 29 eine kreisförmige Buchse 60 mit innen liegenden elektrischen Kontakten aufweist, und die Buchse 60 mit einem am zweiten Gehäuse 33 ausgebildeten form - und flächenkomplementär ausgebildeten Stecker 61 verrastet werden kann, der innen liegende elektrische Kontakte besitzt, die mit den an der Buchse 60 angeordneten elektrischen Kontakten körperlich gekoppelt werden und dabei die elektrisch leitende Verbindung zwischen der Energiespeichereinrichtung 16 und der Antriebseinheit 28 herstellt, ohne dass dazu eine kabelgebundene Verbindung erforderlich ist. Die Stecker-Buchsen-Verbindung 35 ist dabei gleichzeitig eine Schnellkupplung zwischen der Energiespeichereinrichtung 16 und der Antriebseinheit 28, die für eine Lagesicherung der Energiespeichereinrichtung 16 an der Antriebseinheit 28 sorgt und einfach gelöst werden kann, ohne dass dafür der Einsatz von Werkzeug notwendig ist.

An dem, der Stecker-Buchsen-Verbindung 35 gegenüber liegenden Endbereich des ersten Gehäuses 29 ist eine Anschlusseinrichtung 36 vorgesehen, über die die Energiespeichereinrichtung 16 auch in einem im Fahrzeug 1 montierten Zustand mittels einer Ladeeinrichtung aufgeladen werden kann.

Wie es anhand von Fig. 4B der Zeichnung ersichtlich ist, kann auch an dem zweiten Gehäuse 33 eine Anschlusseinrichtung 36 für den Anschluss einer Ladeeinrichtung vorgesehen sein. Damit kann der Benutzer des erfindungsgemäßen Fahrzeugs auch eine Aufladung der Energiespeichereinrichtung 16 durchführen, wenn sich diese nicht am Fahrzeug angeordnet befindet. Dies ist beispielsweise dann von Vorteil, wenn der Benutzer die Energiespeichereinrichtung 16 auch getrennt von Fahrzeug laden möchte, beispielsweise über Nacht, oder wenn eine Energiespeichereinrichtung 16 geladen werden soll, während sich eine andere Energiespeichereinrichtung 16 gerade am Fahrzeug angeordnet befindet.

Das erste Gehäuse 29 weist einen kreisförmig ausgebildeten Deckel 37 auf, an dem eine Vielzahl von längsverlaufenden Kühlrippen 38 angeordnet sind und der mittels Schraubbolzen 39 an dem ersten Gehäuse 29 lösbar festgelegt werden kann. In dem Bereich unterhalb der Anschlusseinrichtung 36 ist am ersten Gehäuse 29 ein Bereich mit längs verlaufenden Kühlrippen 40 ausgebildet, die der Kühlung einer in diesem Bereich innerhalb des ersten Gehäuses 29 angeordneten nicht näher dargestellten Antriebsmotorsteuereinrichtung dienen. Die Antriebsmotorsteuereinrichtung kann eine mit elektronischen Schaltkreisen zur Leistungssteuerung des elektrischen Antriebsmotors 30 versehene Einrichtung sein derart, dass der Benutzer des Fahrzeugs 1 mittels einer an der Lenkstange 6 angeordneten Betätigungseinrichtung die dem elektrischen Antriebsmotor 30 zugeführte Antriebsenergie aus der Energiespeichereinrichtung 16 steuert.

Das erste Gehäuse 29 ist mit einer Aufnahme 42 zur Anordnung einer Achse vorgesehen, mit der die Schwinge 13 in dem ersten Gehäuse 29 gelagert werden kann.

Wie es näher noch anhand von Fig. 5 der Zeichnung ersichtlich ist, verläuft die Aufnahme 42 durch einen mit vertikalen Kühlrippen 43 verlaufenden Gehäuseblock 44 hindurch, der unterhalb des mit längs verlaufenden Kühlrippen 40 versehenen Bereichs angeordnet ist, so dass auch diese Kühlrippen 43 zur Kühlung der innerhalb des ersten Gehäuses 29 und unterhalb der längs verlaufenden Kühlrippen 40 angeordneten Antriebsmotorsteuereinrichtung dienen.

Bei dem innerhalb des ersten Gehäuses 29 in einem dort gebildeten Aufnahmeraum 45 angeordneten elektrischen Antriebsmotor 30 kann es sich um einen bürstenlosen Gleichstrommotor handeln, der einen im Aufnahmeraum 45 gelagerten Stator 46 besitzt und einen Rotor 47, der sich in einem drehfesten Eingriff befindet mit einer Rotorwelle 48, die in dem ersten Gehäuse 29 über ein Wälzlager 49 und ein im Deckel 37 angeordnetes weiteres Wälzlager 50 gelagert ist. Auch ist es möglich, dass es sich bei dem Antriebsmotor um einen eigen oder fremd erregten Drehstrommotor handelt.

Ein Antriebsstrang 51 besitzt einen einstufigen, zugmittelfreien Primärantrieb 52 zwischen der Rotorwelle oder Abtriebswelle 48 des elektrischen Antriebsmotors 30 und einer Abtriebswelle 53 der Antriebseinheit 28.

An der im ersten Gehäuse 29 drehbar gelagerten Abtriebswelle 53 ist das vorstehend bereits erwähnte Kettenritzel 20 drehfest festgelegt und an dessen, dem Ketten ritzel 20 gegenüberliegenden Endbereich ist ein Zahnrad 54 mit einer Verzahnung 55 drehfest festgelegt.

Das Zahnrad 54 befindet sich in einem kämmenden Eingriff mit einem Zwischenrad 56, welches als Doppelrad ausgebildet ist und zwei Verzahnungen 57, 58 aufweist.

Die erste Verzahnung 57 weist einen kleineren Grundkreisdurchmesser auf als die zweite Verzahnung 58 und befindet sich mit dem an der Abtriebswelle 53 drehfest festgelegten Zahnrad 54 in einem kämmenden Eingriff. Die zweite Verzahnung 58 befindet sich in einem kämmenden Eingriff mit dem drehfest an der Rotorwelle 48 festgelegten Zahnrad 59, so dass die Drehzahl der Rotorwelle 48 über das Doppelzahnrad oder Zwischenrad 56 zur Abtriebswelle 53 hin verringert wird.

Dieser einstufige zugmittelfreie Primärantrieb mit dem Doppelzahnrad 56 sorgt verglichen mit einem Kettengetriebe oder einem mit einem Antriebsriemen versehenen stufenlosen CVT-Getriebe für einen deutlich besseren Wirkungsgrad bei der Momentenübertragung von dem elektrische Antriebsmotor 30 zur Abtriebswelle 53.

Darüber hinaus kann durch das Zwischenrad 56 verglichen mit den bereits erwähnten Zugmittelgetrieben eine deutliche Bauraumersparnis erreicht werden, da auf diese Weise der horizontale Abstand "h" zwischen der Mitte der Rotorwelle 48 und der Mitte der Abtriebswelle 53 deutlich verkleinert werden kann. Auch läuft der Primärantrieb mit dem Doppelzahnrad 56 akustisch leiser als ein mit einem Zugmittel arbeitender Primärantrieb.

Wie es sich insbesondere anhand von Fig. 1 und Fig. 2 sowie Fig. 3 der Zeichnung ergibt, befindet sich die Energiespeichereinrichtung 16 im Aufnahmeraum 15 zwischen den Rahmenprofilen 11 und 25 angeordnet. Stellt der Fahrer des Fahrzeugs 1 fest, dass die Ladekapazität der Batterien der Energiespeichereinrichtung 16 deutlich abgenommen hat, so kann er die Energiespeichereinrichtung über die Anschlusseinrichtung 36 mit einem Ladegerät verbinden und die Batterien wieder aufladen. Alternativ hierzu kann er auch mit wenigen Handgriffen die entladene Energiespeichereinrichtung gegen eine ausreichende Ladekapazität aufweisende zweite Energiespeichereinrichtung auswechseln.

Hierzu ist es lediglich erforderlich, den beispielsweise ohne Zuhilfenahme von Werkzeug mit lösbaren Rastverbindungen mit dem Fahrzeugrahmen 10 gekoppelten Fahrersattel 7 vom Fahrzeugrahmen 10 abzunehmen, so dass die Energiespeichereinrichtung 16, die sich im Aufnahmeraum 15 angeordnet befindet, von oben frei zugänglich ist und wiederum ohne Zuhilfenahme von Werkzeug von der Antriebseinheit 28 gelöst werden kann und aus dem Aufnahmeraum 15 herausgehoben werden kann.

Eine mit einer ausreichenden Ladekapazität versehene zweite Energiespeichereinrichtung kann dann von oben in den Aufnahmeraum 15 eingeführt und mit der Antriebseinheit 28 beziehungsweise der Anschlussfläche 32 der Antriebseinheit 28 verbunden und dort festgelegt werden. Dieser Vorgang sorgt dafür, dass die elektrisch leitende Verbindung zwischen der zweiten Energiespeichereinrichtung und der Antriebseinheit 28 bereits wieder hergestellt ist, ohne dass es erforderlich wäre, eine Kabelverbindung zwischen der Antriebseinheit 28 und der Energiespeichereinrichtung bei der Demontage zu lösen und bei der Montage der neuen Energiespeichereinrichtung wieder zu verbinden.

Durch das Herausnehmen der mit verbrauchten Batterien versehenen alten Energiespeichereinrichtung wird die elektrisch leitende Verbindung gelöst und durch das Einsetzen der mit ausreichender Ladekapazität versehenen neuen Energiespeichereinrichtung 16 in den Aufnahmeraum 15 und ihre Festlegung an der Antriebseinheit 28 wird die elektrisch leitende Verbindung zwischen der Energiespeichereinrichtung 16 und der Antriebseinheit 28 sofort wieder hergestellt. Danach ist es nur noch erforderlich, den Fahrersattel wieder aufzusetzen und einzurasten und das Fahrzeug 1 ist wieder betriebsbereit. Obwohl vorstehend erwähnt wurde, dass der Fahrersattel 7 am Fahrzeugrahmen 10 lediglich verrastet wird, kann auch eine lösbare Schraubverbindung zwischen dem Fahrersattel 7 und dem Fahrzeugrahmen 10 vorgesehen sein, die beispielsweise eine ohne Werkzeugeinsatz lösbare Schraubverbindung in der Form einer Flügelmutter oder eine unter Zuhilfenahme von verfügbarem Werkzeug lösbare Schraubverbindung aufweist.

Hinsichtlich vorstehend im Einzelnen nicht näher erläuterter Merkmale der Erfindung wird im Übrigen ausdrücklich auf die Ansprüche und die Zeichnung verwiesen.

### Bezugszeichenliste

- 1: Fahrzeug
- 2: Vorderradführung
- 3: Vorderrad
- 4: Bremsscheibe
- 5: Steuerkopf
- 6: Lenkstange
- 7: Fahrersattel
- 8: Verkleidung
- 9: Heckrahmenbaugruppe
- 10: Fahrzeugrahmen
- 11: Rahmenprofile
- 12: Rahmendreieck
- 13: Hinterradführung, Schwinge
- 14: Steuerkopfrohr
- 15: Aufnahmeraum
- 16: Energiespeichereinrichtung
- 17: Hinterrad
- 18: Bremsscheibe
- 19: Kettenrad
- 20: Kettenritzel
- 21: Federeinrichtung
- 22: Feder
- 23: Dämpferelement
- 24: Abstützung
- 25: Rahmenprofile
- 26: Unterzüge
- 27: Aufnahmeraum
- 28: Antriebseinheit
- 29: erstes Gehäuse
- 30: elektrischer Antriebsmotor
- 31: Getriebe
- 32: Anschlussfläche
- 33: zweites Gehäuse
- 34: Anschlussfläche
- 35: Stecker/Buchsenverbindung
- 36: Anschlusseinrichtung
- 37: Deckel
- 38: Kühlrippen
- 39: Schraubbolzen
- 40: Kühlrippen
- 41: Antriebsmotorsteuereinrichtung
- 42: Aufnahme
- 43: Kühlrippen
- 44: Gehäuseblock
- 45: Aufnahmeraum
- 46: Stator
- 47: Rotor
- 48: Rotorwelle
- 49: Wälzlager
- 50: Wälzlager
- 51: Antriebsstrang
- 52: Primärantrieb
- 53: Abtriebswelle
- 54: Zahnrad
- 55: Verzahnung
- 56: Zwischenrad
- 57: Verzahnung
- 58: Verzahnung
- 59: Zahnrad
- 60: Buchse
- 61: Stecker
- h: Abstand

## Patentansprüche

1. Fahrzeug (1) mit einem Fahrersattel (7) und einem Fahrzeugrahmen (10), der zwei sich bis zu einem Steuerkopf (5) erstreckende und im Abstand zueinander angeordnete Rahmenprofile (11) besitzt und das Fahrzeug (1) wenigstens ein an einer Vorderradführung (2) des Fahrzeugrahmens (10) geführtes Vorderrad (3) und wenigstens ein an einer Hinterradführung (13) geführtes Hinterrad (17) aufweist und das Fahrzeug (1) einen elektrisch betätigten Antriebsmotor (30) sowie eine elektrische Energiespeichereinrichtung (16) und eine Antriebsmotorsteuereinrichtung (41) besitzt und zwischen dem Antriebsmotor (30) und einem Antriebsrad ein Antriebsstrang (51) vorgesehen ist und die Energiespeichereinrichtung (16) oberhalb des Antriebsmotors (30) aufnehmbar ist, **dadurch gekennzeichnet, dass** die Energiespeichereinrichtung (16) zwischen den Rahmenprofilen (11) aufnehmbar ist und an einer den Antriebsmotor (30) aufnehmenden Antriebseinheit (28) unter automatischer Herstellung einer elektrisch leitenden Verbindung zwischen der Energiespeichereinrichtung (16) und der Antriebseinheit (28) oder dem Antriebsmotor (30) lösbar festlegbar ist.

2. Fahrzeug (1) nach Anspruch 1, **dadurch gekennzeichnet, dass** an der Antriebseinheit (28) und der Energiespeichereinrichtung (16) eine Stecker-Buchsenverbindung (35) vorgesehen ist derart, dass die Festlegung der Energiespeichereinrichtung (16) an der Antriebseinheit (28) eine elektrisch leitende Verbindung herstellt.

3. Fahrzeug (1) nach Anspruch 1 oder 2, **dadurch gekennzeichnet, dass** die Antriebseinheit (28) ein den Antriebsmotor (30) und ein Getriebe (31) aufnehmendes erstes Gehäuse (29) besitzt, wobei an einer der Energiespeichereinrichtung (16) zugewandten Gehäuseseite ein Stecker (61) oder eine Buchse (60) zur elektrischen Verbindung mit der Energiespeichereineinrichtung (16) vorgesehen ist.

4. Fahrzeug (1) nach einem der vorstehenden Ansprüche, **gekennzeichnet durch** ein die Energiespeichereinrichtung (16) aufnehmendes zweites Gehäuse (33), wobei an einer der Antriebseinheit (28) zugewandten Gehäuseseite eine Buchse (60) oder ein Stecker (61) zur elektrischen Verbindung mit der Antriebseinheit (28) vorgesehen ist.

5. Fahrzeug (1) nach einem der vorstehenden Ansprüche, **dadurch gekennzeichnet, dass** die Antriebseinheit (28) eine Aufnahme (42) zur Anordnung einer Hinterradführung (13) aufweist.

6. Fahrzeug (1) nach einem der vorstehenden Ansprüche, **dadurch gekennzeichnet, dass** die Antriebsmotorsteuereinrichtung (41) in der Antriebseinheit (28) angeordnet ist.

7. Fahrzeug (1) nach einem der vorstehenden Ansprüche, **dadurch gekennzeichnet, dass** die Energiespeichereinrichtung (16) und die Antriebseinheit (28) mittels einer vorzugsweise ohne Zuhilfenahme von Werkzeug betätigbaren Schnellkupplung unter Herstellung einer elektrisch leitenden Verbindung zwischen der Energiespeichereinrichtung (16) und dem Antriebsmotor (30) verbindbar sind.

8. Fahrzeug (1) nach einem der Ansprüche 3 bis 7, **dadurch gekennzeichnet, dass** an dem ersten Gehäuse (29) und/oder dem zweiten Gehäuse (33) eine Anschlusseinrichtung (36) zum Anschluss einer Ladeeinrichtung zur Einspeisung elektrischer Energie in die Energiespeichereinrichtung (16) vorgesehen ist.

9. Fahrzeug (1) nach einem der vorstehenden Ansprüche, **dadurch gekennzeichnet, dass** der Antriebsstrang (51) einen einstufigen zugmittelfreien Primärantrieb (52) zwischen einer Abtriebswelle (48) des Antriebsmotors (30) und einer Abtriebswelle (53) der Antriebseinheit (28) aufweist.

10. Fahrzeug (1) nach Anspruch 9, **dadurch gekennzeichnet, dass** der Primärantrieb (52) ein zwei Verzahnungen (57, 58) aufweisendes einstückiges Zwischenrad (56) aufweist, dessen erste Verzahnung (58) mit einem Zahnrad (59) der Abtriebswelle (48) des Antriebsmotors (30) kämmt und dessen zweite Verzahnung (57) mit einer Verzahnung (55) der Abtriebswelle (53) der Antriebseinheit (28) kämmt.

11. Fahrzeug (1) nach einem der vorstehenden Ansprüche, **dadurch gekennzeichnet, dass** der Antriebsstrang (51) zwischen einer Abtriebswelle (53) der Antriebseinheit (28) und einem Antriebsrad (17) ein Zugmittel besitzt.

12. Fahrzeug (1) nach einem der vorstehenden Ansprüche, **dadurch gekennzeichnet, dass** die Antriebseinheit (28) zumindest im Bereich des Antriebsmotors (30) und der Antriebsmotorsteuereinrichtung (41) mit in Längsrichtung der Antriebseinheit (28) verlaufenden Kühlrippen (38, 40) und im Bereich der Antriebsmotorsteuereinrichtung (41) mit einem Bereich mit in vertikaler Richtung verlaufenden Kühlrippen (43) versehen ist, der eine Aufnahme (42) zur Anordnung einer Hinterradführung (13) besitzt und von der Abtriebswelle (53) der Antriebseinheit (28) durchsetzt ist.

13. Fahrzeug (1) nach einem der vorstehenden Ansprüche, **dadurch gekennzeichnet, dass** die Antriebseinheit (28) einen mit einem Deckel (37) verschließbaren Aufnahmeraum (45) für den Antriebsmotor (30) besitzt und die Abtriebswelle (48) des Antriebsmotors (30) mittels eines Wälzlagers (50) in dem Deckel (37) lagerbar ist und der Deckel (37) mit Kühlrippen (38) versehen ist.

14. Fahrzeug (1) nach einem der vorstehenden Ansprüche, **dadurch gekennzeichnet, dass** es ein einspuriges Fahrzeug mit nur einem Vorderrad (3) und nur einem Hinterrad (17) ist und die Antriebseinheit (28) zwischen den Rahmenprofilen (11) unterhalb der Energiespeichereinrichtung (16) angeordnet ist und das Fahrzeug (1) eine mit der Vorderradführung (2) funktional gekoppelte Lenkeinrichtung (6) aufweist und das Hinterrad (17) mittels einer Schwinge (13) geführt ist, die in der Antriebseinheit (28) gelagert ist.

## Claims

1. A vehicle (1) having a rider saddle (7) and a vehicle frame (10), which has two frame profiles (11) spaced apart from one another and extending up to a steering head (5) and the vehicle (1) has at least one front wheel (3) guided on a front wheel guide (2) of the vehicle frame (10) and at least one rear wheel (17) guided on a rear wheel guide (13), and the vehicle (1) has an electrically operated drive motor (30) and an electrical energy storage device (16) and a drive motor controller (41), and a drive train (51) is provided between the drive motor (30) and a driving wheel, and the energy storage device (16) is able to be received above the drive motor (30), **characterized in that** the energy storage device (16) is able to be received between the frame profiles (11) and is able to be releasably secured on a drive unit (28) receiving the drive motor (30) with automatic production of an electrically conducting connection between the energy storage device (16) and the drive unit (28) or the drive motor (30).

2. The vehicle (1) according to Claim 1, **characterized in that** a plug-and-socket connector (35) is provided on the drive unit (28) and the energy storage device (16), such that the securing of the energy storage device (16) on the drive unit (28) produces an electrically conducting connection.

3. The vehicle (1) according to Claim 1 or 2, **characterized in that** the drive unit (28) has a first housing (29) receiving the drive motor (30) and a transmission (31), wherein on a housing side facing the energy storage device (16) a plug (61) or a socket (60) is provided for electrical connection with the energy storage device (16).

4. The vehicle (1) according to one of the preceding claims, **characterized by** a second housing (33) receiving the energy storage device (16), wherein on a housing side facing the drive unit (28) a socket (60) or a plug (61) is provided for electrical connection with the drive unit (28).

5. The vehicle (1) according to one of the preceding claims, **characterized in that** the drive unit (28) has a support (42) for the arrangement of a rear wheel guide (13).

6. The vehicle (1) according to one of the preceding claims, **characterized in that** the drive motor controller (41) is arranged in the drive unit (28).

7. The vehicle (1) according to one of the preceding claims, **characterized in that** the energy storage device (16) and the drive unit (28) are able to be connected by means of a quick coupling, preferably actuatable without the aid of a tool, with the production of an electrically conducting connection between the energy storage device (16) and the drive motor (30).

8. The vehicle (1) according to one of Claims 3 to 7, **characterized in that** on the first housing (29) and/or the second housing (33) a connecting device (36) is provided for the connecting of a charging device for supplying electrical energy into the energy storage device (16).

9. The vehicle (1) according to one of the preceding claims, **characterized in that** the drive train (51) has a single-stage primary drive (52), free of traction means, between an output shaft (48) of the drive motor (30) and an output shaft (53) of the drive unit (28).

10. The vehicle (1) according to Claim 9, **characterized in that** the primary drive (52) has a one-piece intermediate wheel (56) having two toothings (57, 58), the first toothing (58) of which meshes with a gearwheel (59) of the output shaft (48) of the drive motor (30) and the second toothing (57) of which meshes with a toothing (55) of the output shaft (53) of the drive unit (28).

11. The vehicle (1) according to one of the preceding claims, **characterized in that** the drive train (51) has a traction means between an output shaft (53) of the drive unit (28) and a drive wheel (17).

12. The vehicle (1) according to one of the preceding claims, **characterized in that** the drive unit (28) is provided at least in the region of the drive motor (30) and of the drive motor controller (41) with cooling fins (38, 40) running in longitudinal direction of the drive unit (28), and in the region of the drive motor controller (41) with a region with cooling fins (43) running in vertical direction, which has a support (42) for the arrangement of a rear wheel guide (13) and is penetrated by the output shaft (53) of the drive unit (28).

13. The vehicle (1) according to one of the preceding claims, **characterized in that** the drive unit (28) has a receiving chamber (45), closable by a cover (37), for the drive motor (30), and the output shaft (48) of the drive motor (30) is able to be mounted in the cover (37) by means of a roller bearing (50), and the cover (37) is provided with cooling fins (38).

14. The vehicle (1) according to one of the preceding claims, **characterized in that** it is a single-track vehicle with only one front wheel (3) and only one rear wheel (17), and the drive unit (28) is arranged between the frame profiles (11) beneath the energy storage device (16) and the vehicle (1) has a steering device (6) functionally coupled with the front wheel guide (2) and the rear wheel (17) is guided by means of a swing arm (13) which is mounted in the drive unit (28).

## Revendications

1. Véhicule (1) comportant une selle de conducteur (7) et un châssis de véhicule (10), qui possède deux profilés de châssis (11) s'étendant jusqu'à un bloc de guidage (5) et espacés l'un de l'autre et le véhicule présente au moins une roue avant (3) guidée sur un guidage de roue avant (2) du châssis de véhicule (10) et au moins une roue arrière (17) guidée sur un guidage de roue arrière (13) et le véhicule (1) possède un moteur d'entraînement (30) actionné électriquement ainsi qu'un dispositif d'accumulation d'énergie électrique (16) et un dispositif de commande de moteur d'entraînement (41) et une chaîne cinématique (51) est prévue entre le moteur d'entraînement (30) et une roue d'entraînement et le dispositif d'accumulation d'énergie (16) peut être renfermé au-dessus du moteur d'entraînement (30), **caractérisé en ce que** le dispositif d'accumulation d'énergie (16) peut être renfermé entre les profilés de châssis (11) et peut être immobilisé de manière amovible sur une unité d'entraînement (28) renfermant le moteur d'entraînement (30) sous établissement automatique d'une liaison électriquement conductrice entre le dispositif d'accumulation d'énergie (16) et l'unité d'entraînement (28) ou le moteur d'entraînement (30).

2. Véhicule (1) selon la revendication 1, **caractérisé en ce que** une liaison fiche/prise (35) est prévue sur l'unité d'entraînement (28) et le dispositif d'accumulation d'énergie (16) de telle sorte que l'immobilisation du dispositif d'accumulation d'énergie (16) sur l'unité d'entraînement (28) établisse une liaison électriquement conductrice.

3. Véhicule (1) selon les revendications 1 ou 2, **caractérisé en ce que** l'unité d'entraînement (28) possède un premier logement (29) renfermant le moteur d'entraînement (30) et une transmission (31), dans lequel sur un côté du logement tourné vers le dispositif d'accumulation d'énergie (16), une prise (61) ou une douille (60) est prévue à des fins de liaison électrique avec le dispositif d'accumulation d'énergie (16).

4. Véhicule (1) selon une des revendications précédentes, **caractérisé par** un deuxième logement (33) renfermant le dispositif d'accumulation d'énergie (16), dans lequel sur un côté du logement tourné vers l'unité d'entraînement (28), une prise (60) ou une fiche (61) est prévue à des fins de liaison électrique avec l'unité d'entraînement (28).

5. Véhicule (1) selon une des revendications précédentes, **caractérisé en ce que** l'unité d'entraînement (28) présente un réceptacle (42) à des fins de disposition d'un guidage de roue arrière (13).

6. Véhicule (1) selon une des revendications précédentes, **caractérisé en ce que** le dispositif de commande de moteur d'entraînement (41) est disposé dans l'unité d'entraînement (28).

7. Véhicule (1) selon une des revendications précédentes, **caractérisé en ce que** le dispositif d'accumulation d'énergie (16) et l'unité d'entraînement (28) peuvent être reliés au moyen d'un raccord rapide actionnable de préférence sans avoir recours à un outil en établissant une liaison électriquement conductrice entre le dispositif d'accumulation d'énergie (16) et le moteur d'entraînement (30).

8. Véhicule (1) selon une des revendications 3 à 7, **caractérisé en ce que** sur le premier logement (29) et/ou le deuxième logement (33) un dispositif de connexion (36) à des fins de connexion d'un dispositif de charge est prévu afin d'alimenter en énergie électrique le dispositif d'accumulation d'énergie (16).

9. Véhicule (1) selon une des revendications précédentes, **caractérisé en ce que** le chaîne cinématique (51) présente un entraînement primaire exempt de moyen de traction à un étage (52) entre un arbre de sortie (48) du moteur d'entraînement (30) et un arbre de sortie (53) de l'unité d'entraînement (28).

10. V2hicule (1) selon la revendication 9, **caractérisé en ce que** l'entraînement primaire (52) présente une roue intermédiaire (56) en un seul tenant présentant deux dentures (57,58), dont la première denture (58) s'engrène avec une roue dentée (59) de l'arbre de sortie (48) du moteur d'entraînement (30) et dont la deuxième denture (57) s'engrène avec une denture (55) de l'arbre de sortie (53) de l'unité d'entraînement (28).

11. Véhicule (11) selon une des revendications précédentes, **caractérisé en ce que** la chaîne cinématique (51) possède un moyen de traction entre un arbre de sortie (53) de l'unité d'entraînement (28) et une roue d'entraînement (17).

12. Véhicule (1) selon une des revendications précédentes, **caractérisé en ce que** l'unité d'entraînement (28) est pourvue au moins au niveau du moteur d'entraînement (30) et du dispositif de commande de moteur d'entraînement (41) de nervures de refroidissement (38,40) s'étendant dans la direction longitudinale de l'unité d'entraînement (28) et est pourvue au niveau du dispositif de commande de moteur d'entraînement (421) d'une zone comportant des nervures de refroidissement (43) s'étendant dans la direction verticale, qui possède un réceptacle (42) à des fins de disposition d'un guidage de roue arrière (13) et est traversé par l'arbre de sortie (53) de l'unité d'entraînement (28).

13. Véhicule (1) selon une des revendications précédentes, **caractérisé en ce que** l'unité d'entraînement (28) possède un espace de réceptacle (45) destiné au moteur d'entraînement pouvant être fermé par un couvercle (37) et l'arbre de sortie (48) du moteur d'entraînement (30) peut être positionné au moyen d'un palier à roulements (50) dans le couvercle (37) et le couvercle (37) est pourvu de nervures de refroidissement (38).

14. Véhicule (1) selon une des revendications précédentes, **caractérisé en ce que** il s'agit d'un véhicule à voie unique comportant seulement une roue avant (3) et seulement une roue arrière (17) et l'unité d'entraînement (28) est disposée entre les profilés de châssis (11) au-dessous du dispositif d'accumulation d'énergie (126) et le véhicule (1) présente un dispositif de direction couplé fonctionnellement au guidage de roue avant (2) et la roue arrière (17) est guidée au moyen d'un bras oscillant (13), qui est positionné dans l'unité d'entraînement (28).
